# EUROPEAN PATENT APPLICATION

(11) **EP 4 778 788 A1**
(43) Date of publication of application: **22.07.2026**
(21) Application number: 25152536.6
(22) Date of filing: 17.01.2025
(51) Int. Cl.: B60Q 1/32, B60Q 3/78, F21S 4/00, F21S 43/14, F21S 43/15, F21V 7/00, F21W 104/00, F21S 2/00, F21S 43/37

(54) **LIGHTING SYSTEM AND LIGHTING INSTALLATION**

(71) Applicant: HELLA GmbH & Co. KGaA, 59552 Lippstadt (DE); HELLA Saturnus Slovenija d.o.o., 1001 Ljubljana (SI)
(72) Inventor: Allouis, David, 49186 Bad Iburg (DE); Plesnik, Filip, 1000 Ljubljana (SI); Schöne, Heiko, 79669 Zell im Wiesental (DE); Ogrinc, Anze, 1000 Ljubljana (SI)
(74) Representative: Behr-Wenning, Gregor

(57) **Abstract**

The invention relates to a lighting system (100), in particular for the interior or exterior illumination of a vehicle, comprising LED light sources (1) on an at least partially flexible electrical unit (2), a plurality of reflector elements (3), which are flexibly interconnected, and which are each associated to at least one LED light source (1), and a housing (4), wherein the electrical unit (2) and the reflector elements (3) are accommodated in the housing (4).

## Description

The present invention relates to a lighting system, in particular for the interior or exterior illumination of a vehicle, and to an associated lighting installation.

### PRIOR ART

Lighting solutions for automotive applications increasingly have to fulfil decorative functions in addition to their primary lighting or signalling functions and thus have to meet high aesthetic requirements. The present invention relates to lighting installations in which an extended, in particular strip-shaped lighting system is integrated into a vehicle component, e.g., a panel element in the interior or an apron attached to the vehicle body, in such a way that it is strictly adapted to the surface contour of the component. In a vehicle's interior, such a lighting system may serve for instance as a foot-well lighting, a reading illumination or for purely decorative purposes. Applications in the vehicle's exterior include for instance signalling lights or "welcome-light" functions.

In the prior art, these applications are typically addressed by lighting systems based on light guide elements emitting light via an extended edge ("edge-light"). A drawback of such lighting systems is their lack of geometrical flexibility and the adaptation of these systems to vehicle components with complex 3D surface contours is therefore challenging. Furthermore, the variety of dynamic light signals and illumination effects, which can be created with edge-light systems, is somewhat limited, since the light guidance principle is optimized for full-surface, homogeneous illumination.

### DISCLOSURE OF THE INVENTION

It is an object of the present invention to propose a lighting system for the aforementioned automotive applications, which is in particular characterized by distinct flexibility in view of the geometrical arrangement and a wide range of creatable lighting effects.

This object is achieved by a lighting system as taught by claim 1 and a lighting installation according to claim 10 or 12. Advantageous embodiments are defined in the subclaims.

The invention discloses a lighting system, in particular for the interior or exterior illumination of a vehicle, comprising LED light sources on an at least partially flexible electrical unit, a plurality of reflector elements, which are flexibly interconnected, and which are each associated to at least one LED light source, and a housing, wherein the electrical unit and the reflector elements are accommodated in the housing.

The idea of the invention lies in segmenting the lighting system into numerous functional units comprising LED light sources and associated small-scale reflector elements, wherein these functional units can be arranged at an angle to one another so that the entirety of the functional units can assume a complex 3D shape, in particular in adaptation to a curved surface. This allows the lighting system to be flexibly adapted to different vehicle components of various surface contours, wherein only the rigid housing has to be manufactured individually for each application. The reflector elements serve for homogenization and/or colour mixing of the light emitted from the associated LED light sources. Each reflector element may be associated with a set of RGB-LED light sources for colour illumination. In particular, the lighting system comprises a control unit capable of addressing each LED light source individually, so that a much wider range of illumination effects can be created compared to a lighting system based on extended or injection-moulded light guides with only few LED modules at the ends.

In a preferred embodiment of the lighting system the reflector elements feature a chain-like arrangement, wherein each reflector element, except for the end members, is flexibly connected to two adjacent reflector elements. This embodiment is suitable to generate linear light strips on arbitrary surface contour.

For instance, the reflector elements are interconnected by coupling studs made of a flexible polymeric material. Such coupling studs allow adjacent reflector elements to be tilted towards each other, wherein the length and the flexibility of the coupling studs determines the detailed amount of tilting. This embodiment is particularly suitable to yield a chain-like arrangement of the reflector elements.

Preferably, the reflector elements together with the means for their interconnection, e.g. the aforementioned coupling studs, are manufactured in one piece from a flexible polymeric material, for instance from a thermoplastic polyurethane, or manufactured by two-component injection moulding from a flexible and a rigid polymer. Alternatively, the reflector elements and the means for their interconnection can be manufactured separately and subsequently assembled, in particular wherein the means for interconnection are detachable, e.g., by forming male-female-type joints. Such detachable interconnections lead to improved modularisability of the lighting system.

In a further embodiment each reflector element features a reflector chamber with a mounting aperture for the LED light source and a light exit aperture, which are oriented basically perpendicular to each other. The perpendicular orientation of the apertures is intended to ensure that the light emitted from the LED light source is reflected at least once within the reflector chamber in order to create a homogeneous light distribution when exiting the light exit aperture.

The light homogenisation effect of each reflector element may be further improved by a screening shield between the mounting aperture and the light exit aperture, which is designed to prevent light from exiting the reflector chamber unreflected. Preferably, the screening shield features a reflective and convex surface facing the light entrance aperture, so that reflection at the screening shield yields a homogeneous light distribution in terms of spatial and angular uniformity and/or colour-mixing in case of using LED light sources of different colours, in particular RGB.

The flexible electrical unit of the LED light sources for instance comprises a plurality of printed-circuit boards (PCB), which are flexibly and electrically interconnected, and which are each equipped with at least one LED light source. The flexible connector elements for interconnecting the PCBs may be thermoformed, ribbon-like elements.

The invention furthermore relates to a lighting installation for the interior illumination of a vehicle, comprising a panel element, in particular a door panel, a dash panel, a console panel or a ceiling panel, and at least one lighting system according to one of the previous embodiments, which is integrated in the panel element. The lighting system is in particular covered by a transparent or translucent cover element, e.g., such as a partially transparent fabric, a perforated cover layer or a cover layer of milky appearance. A further application of the lighting system for the exterior illumination of a vehicle concerns its integration into an attachment part for the vehicle body, in particular a front apron, a rear apron, a rocker panel or an exterior mirror. Such lighting installations may comprise a lighting system that features a stripe-like shape and is adapted to the surface contour of the panel element or the attachment part. The lighting installation may feature a plurality of electrically interconnected lighting systems, in particular in electrical series connection via end-side terminals and controlled by a common control unit.

### PREFERRED EMBODIMENTS

Additional details, characteristics and advantages of the object of the invention are disclosed in the following description of the respective figures - which in an exemplary and schematic fashion - show preferred embodiments of the invention.
- Fig. 1:: a first embodiment of the lighting system,

- Fig. 2:: a reflector element of the first embodiment,
- Fig. 3:: a first embodiment of the lighting installation,
- Fig. 4:: a second embodiment of the lighting installation, and
- Fig. 5:: an embodiment of the lighting installation in a vehicle door.

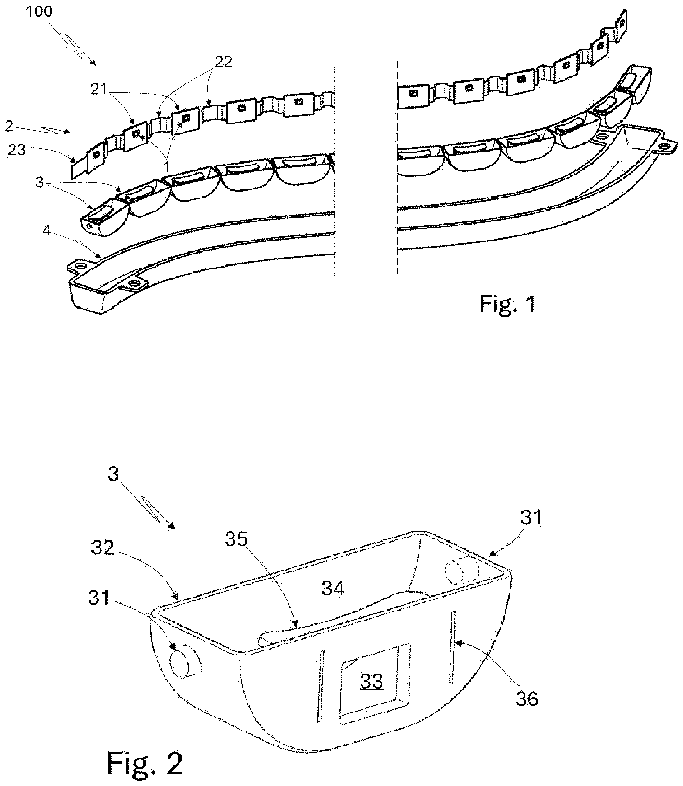

Fig. 1 shows an exploded view (mid-section cut off) of a first embodiment of the lighting system 100 comprising the LED light sources 1 on the flexible electrical unit, a plurality of reflector elements 3, which are flexibly interconnected, and which are each associated to one LED light source 1, and the rigid housing 4 to accommodate the electrical unit 2 and the reflector elements 3. The overall shape of the lighting system 100 is S-like curved.

The flexible electrical unit 2 comprises a plurality of PCBs 21, which are flexibly and electrically interconnected by the ribbon-like flexible connector elements 22, and which are each equipped with one LED light source 1. The flexibility of the electrical unit 2 is provided by the connector elements 22. A power supply and a control unit (not shown) can be electrically connected to the terminal 23 at the side of the electrical unit 2. Each of the LED light sources 1 can be addressed individually by a control unit via the terminal 23.

In the perspective of Fig. 1, the electrical unit 2 should be attached to the reflector elements 3 from behind, and the light is emitted upwards from the reflector elements 3. The reflector elements 3 feature a chain-like arrangement, wherein each reflector element 3, except for the end members, is flexibly connected to two adjacent reflector elements 3. The reflector elements 3 together with the means for their interconnection are manufactured in one piece from a flexible polymeric material, wherein the means for interconnection consist of coupling studs (31), which can be seen in Fig. 2.

Fig. 2 shows a perspective view of a reflector element 3 as a section of the first embodiment of Fig. 1. The reflector element 3 features the reflector chamber 32 with the mounting aperture 33 for the LED light source (1) and the light exit aperture 34, which are oriented basically perpendicular to each other. The reflector chamber 32 roughly features the shape of a hollow half-cylinder. The inner surfaces of the reflector chamber 32 are reflective, e.g. of white colour or featuring a metallic coating. A PCB (21) of the electrical unit (2) can be mounted to the reflector chamber 32 and fastened to the fixation slits 36 with the belonging LED light source (1) being received in the mounting aperture 33.

The reflector element 3 features the screening shield 35 between the mounting aperture 33 and the light exit aperture 34, which is designed to prevent light from exiting the reflector chamber 32 unreflected. The screening shield 35 features a convex surface facing the mounting aperture 33, which widens the range of reflexion angles and thus yields a higher degree of light homogenisation.

The coupling studs 31 (shown cut) at the side of the reflector chamber 32 serves as flexible means for interconnection. The coupling studs 31 are manufactured in one piece with the reflector chamber 32 from a flexible polymeric material, so that the coupling studs 31 can be bend and the adjacent reflector elements can thus be tilted towards each other.

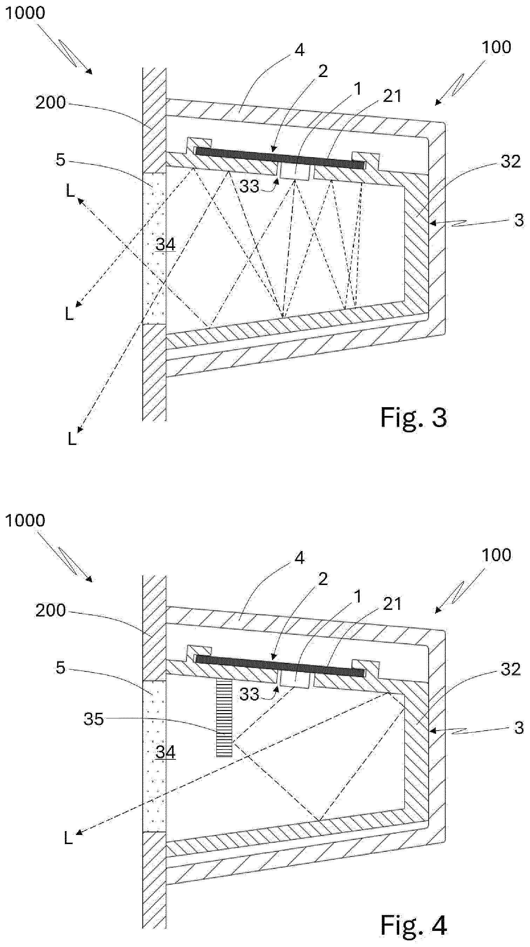

Fig. 3 shows a cross-section of a first embodiment of the lighting installation 1000 for the interior illumination of a vehicle, comprising the panel element 200 and the lighting system 100, which is integrated in the panel element 200. The rigid housing 4 serves for connecting the lighting system 100 with the panel element 200 and accommodates the reflector element 3 and the flexible electrical unit 2 attached to it. The light exit aperture 34 of the reflector chamber 32 is covered by the transparent cover element 5. Some exemplary light beams L emitted from the LED light source 1 in the mounting aperture 33 are shown in their course through the reflector chamber 32. The multiple reflections yield a homogenisation of the light distribution emanating from the light exit aperture 34, so that the lighting installation 1000 creates a similar optical impression under a wide range of viewing angles.

Fig. 4 shows a cross-section of a second embodiment of the lighting installation 1000, wherein the reflector element 3 features the additional screening shield 35 between the mounting aperture 33 and the light exit aperture 34. As shown by the exemplary light beam L the screening shield 35 prevents light emitted from the LED light source 1 from exiting the reflector chamber 32 unreflected. The surface of the screening shield 35 is reflective to keep the light yield high.

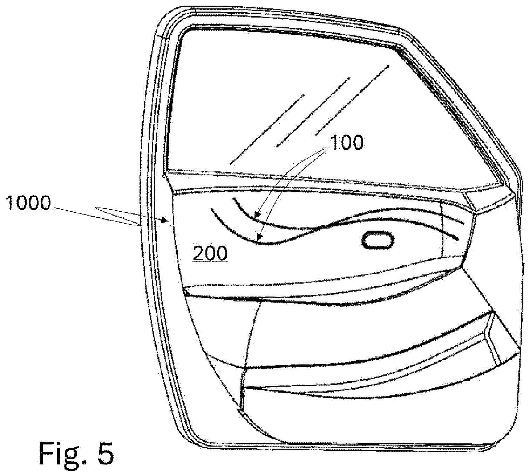

Fig. 5 shows a perspective view of the lighting installation 1000 on the inside of a vehicle door comprising two lighting systems 100 integrated into the door panel 200. Both lighting systems 100 feature stripe-like shapes and are adapted to the surface contour of the panel element 200.

### List of Numerals

- 1: LED light source
- 2: electrical unit
- 21: PCB
- 22: flexible connector element
- 23: terminal
- 3: reflector element
- 31: coupling stud
- 32: reflector chamber
- 33: mounting aperture
- 34: light exit aperture
- 35: screening shield
- 36: fixation slit
- 4: housing
- 5: cover element
- 100: lighting system
- 200: panel element
- 1000: lighting installation

- L: light beam

## Claims

1. Lighting system (100), in particular for the interior or exterior illumination of a vehicle, comprising LED light sources (1) on an at least partially flexible electrical unit (2), a plurality of reflector elements (3), which are flexibly interconnected, and which are each associated to at least one LED light source (1), and a housing (4), wherein the electrical unit (2) and the reflector elements (3) are accommodated in the housing (4).

2. Lighting system (100) according to claim 1, **characterised in that** the reflector elements (3) feature a chain-like arrangement, wherein each reflector element (3), except for the end members, is flexibly connected to two adjacent reflector elements (3).

3. Lighting system (100) according to claim 1 or 2, **characterised in that** the reflector elements (3) are interconnected by coupling studs (31) made of a flexible polymeric material.

4. Lighting system (100) according to one of the previous claims, **characterised in that** the reflector elements (3) together with the means for their interconnection are manufactured in one piece from a flexible polymeric material or manufactured by two-component injection moulding from a flexible and a rigid polymer.

5. Lighting system (100) according to one of the claims 1 to 3, **characterised in that** the reflector elements (3) and the means for their interconnection are manufactured separately and subsequently assembled, in particular wherein the means for interconnection are detachable, e.g., by forming male-female-type joints.

6. Lighting system (100) according to one of the previous claims, **characterised in that** each reflector element (3) features a reflector chamber (32) with a mounting aperture (33) for the LED light source (1) and a light exit aperture (34), which are oriented basically perpendicular to each other.

7. Lighting system (100) according to claim 6, **characterised in that** each reflector element (3) features a screening shield (35) between the mounting aperture (33) and the light exit aperture (34), which is designed to prevent light from exiting the reflector chamber (32) unreflected, in particular to yield a homogeneous light distribution in terms of spatial and angular uniformity and/or colour-mixing.

8. Lighting system (100) according to claim 7, **characterised in that** the screening shield (35) features a convex surface facing the mounting aperture (33).

9. Lighting system (100) according to one of the previous claims, **characterised in that** the electrical unit (2) comprises a plurality of printed-circuit boards (21), which are flexibly and electrically interconnected, and which are each equipped with at least one LED light source (1).

10. Lighting installation (1000) for the interior illumination of a vehicle, comprising a panel element (200), in particular a door panel, a dash panel, a console panel or a ceiling panel, and at least one lighting system (100) according to one of the previous claims, which is integrated in the panel element (200).

11. Lighting installation (1000) according to claim 10, **characterised in that** the lighting system (100) is covered by a transparent or translucent cover element (5).

12. Lighting installation for the exterior illumination of a vehicle, comprising an attachment part for the vehicle body, in particular a front apron, a rear apron, a rocker panel or an exterior mirror, and a lighting system according to one of the previous claims, which is integrated in the attachment part.

13. Lighting installation (1000) according to one of the claims 10 to 12, **characterised in that** the lighting system (100) features a stripe-like shape and is adapted to the surface contour of the panel element (200) or the attachment part.

14. Lighting installation (1000) according to one of the claims 10 to 13, **characterised in that** the lighting installation (1000) features a plurality of electrically interconnected lighting systems (100), in particular in electrical series connection via end-side terminals (23).

## Amended claims

### Amended claims in accordance with Rule 137(2) EPC.

1. Lighting system (100), in particular for the interior or exterior illumination of a vehicle, comprising LED light sources (1) on an at least partially flexible electrical unit (2), a plurality of reflector elements (3), which are flexibly interconnected, and which are each associated to at least one LED light source (1), and a housing (4), wherein the electrical unit (2) and the reflector elements (3) are accommodated in the housing (4), **characterised in that** each reflector element (3) features a reflector chamber (32) with a mounting aperture (33) for the LED light source (1) and a light exit aperture (34), which are oriented basically perpendicular to each other.

2. Lighting system (100) according to claim 1, **characterised in that** the reflector elements (3) feature a chain-like arrangement, wherein each reflector element (3), except for the end members, is flexibly connected to two adjacent reflector elements (3).

3. Lighting system (100) according to claim 1 or 2, **characterised in that** the reflector elements (3) are interconnected by coupling studs (31) made of a flexible polymeric material.

4. Lighting system (100) according to one of the previous claims, **characterised in that** the reflector elements (3) together with the means for their interconnection are manufactured in one piece from a flexible polymeric material or manufactured by two-component injection moulding from a flexible and a rigid polymer.

5. Lighting system (100) according to one of the claims 1 to 3, **characterised in that** the reflector elements (3) and the means for their interconnection are manufactured separately and subsequently assembled, in particular wherein the means for interconnection are detachable, e.g., by forming male-female-type joints.

6. Lighting system (100) according to claim 1, **characterised in that** each reflector element (3) features a screening shield (35) between the mounting aperture (33) and the light exit aperture (34), which is designed to prevent light from exiting the reflector chamber (32) unreflected, in particular to yield a homogeneous light distribution in terms of spatial and angular uniformity and/or colour-mixing.

7. Lighting system (100) according to claim 6, **characterised in that** the screening shield (35) features a convex surface facing the mounting aperture (33).

8. Lighting system (100) according to one of the previous claims, **characterised in that** the electrical unit (2) comprises a plurality of printed-circuit boards (21), which are flexibly and electrically interconnected, and which are each equipped with at least one LED light source (1).

9. Lighting installation (1000) for the interior illumination of a vehicle, comprising a panel element (200), in particular a door panel, a dash panel, a console panel or a ceiling panel, and at least one lighting system (100) according to one of the previous claims, which is integrated in the panel element (200).

10. Lighting installation (1000) according to claim 9, **characterised in that** the lighting system (100) is covered by a transparent or translucent cover element (5).

11. Lighting installation for the exterior illumination of a vehicle, comprising an attachment part for the vehicle body, in particular a front apron, a rear apron, a rocker panel or an exterior mirror, and a lighting system according to one of the previous claims, which is integrated in the attachment part.

12. Lighting installation (1000) according to one of the claims 9 to 11, **characterised in that** the lighting system (100) features a stripe-like shape and is adapted to the surface contour of the panel element (200) or the attachment part.

13. Lighting installation (1000) according to one of the claims 9 to 12, **characterised in that** the lighting installation (1000) features a plurality of electrically interconnected lighting systems (100), in particular in electrical series connection via end-side terminals (23).
